# EUROPÄISCHE PATENTSCHRIFT

(11) **EP 2 743 728 B1**
(45) Veröffentlichungstag und Bekanntmachung des Hinweises auf die Patenterteilung: **03.05.2017**
(21) Anmeldenummer: 13177705.4
(22) Anmeldetag: 04.01.2007
(51) Int. Cl.: G01S 17/66, G01C 15/00, G01S 17/02

(54) **Tracking-Verfahren und Messsystem mit Lasertracker**
Tracking method and measuring system with laser tracker
Procédé de suivi et système de mesure avec appareil de suivi laser

(30) Priorität: 13.01.2006 CH 582006
(43) Veröffentlichungstag der Anmeldung: 18.06.2014
(62) Teilanmeldung aus: 07700104.8
(73) Patentinhaber: Leica Geosystems AG, 9435 Heerbrugg (CH)
(72) Erfinder: Dold, Jürgen, CH-6204 Sempach (CH); Moser, Daniel, CH-5707 Seengen (CH); Zumbrunn, Roland, CH-4443 Wittinsburg (CH)
(74) Vertreter: Kaminski Harmann

(56) Entgegenhaltungen:
- EP-A- 1 480 006
- WO-A1-03/062744
- DE-A1- 2 239 999
- US-A- 5 098 185
- US-A- 5 361 217

## Beschreibung

Die Erfindung liegt im Gebiete der Messtechnik und betrifft ein Tracking-Verfahren und ein Messsystem mit Lasertracker nach den Oberbegriffen der entsprechenden Patentansprüche. Das Tracking-Verfahren dient zur automatischen Verfolgung eines Zielpunktes, insbesondere eines sich bewegenden Zielpunktes, mit dem Messstrahl eines Lasertrackers. Das Messsystem mit Lasertracker ist ausgerüstet für die Durchführung des Verfahrens.

Zur Messung der Position von sich bewegenden Zielpunkten werden vielfach sogenannte Lasertracker eingesetzt. Unter dem Begriff Lasertracker werden Vorrichtungen verstanden, die mindestens einen mit einem fokussierten Laserstrahl (in der folgenden Beschreibung mit Messstrahl bezeichnet) arbeitenden Distanzmesser aufweisen. Beispielsweise mit Hilfe eines um zwei Achsen drehbaren Spiegels wird die Richtung des Messstrahles auf den Zielpunkt eingestellt und mit den Drehachsen zugeordneten Winkelgebern erfasst. Der zu vermessende Zielpunkt wird mit einem Retroreflektor (insbesondere Würfeleckenprisma oder Anordnung von drei senkrecht aufeinander stehenden Spiegeln) versehen, wobei der Retroreflektor den darauf treffenden Messstrahl des Lasertrackers zu diesem zurück reflektiert. Dabei verläuft der reflektierte Messstrahl koaxial zum emittierten Messstrahl, wenn der Messstrahl genau zentrisch auf den Reflektor trifft, und parallel versetzt dazu, wenn der Messstrahl nicht zentrisch auf den Reflektor trifft. Je nach Ausführungsform des Trackers wird aus einem Vergleich des ausgesandten und reflektierten Laserlichtes auf eine absolute Distanz zwischen Lasertracker und Zielpunkt und/oder auf eine Veränderung dieser Distanz geschlossen. Aus den von den Winkelgebern erfassten Winkeln und der vom Distanzmesser detektierten Distanz wird die Position des Reflektors bzw. des Zielpunktes relativ zum Tracker berechnet.

Ein Teil des reflektierten Messstrahls wird üblicherweise auf eine PSD (position sensitive device) geleitet. Aus der Position, in der der reflektierte Messstrahl auf die lichtempfindliche Fläche der PSD trifft, wird auf die parallele Verschiebung des reflektierten relativ zum emittierten Messstrahl geschlossen. Die dadurch ermittelten Messdaten definieren den parallelen Versatz des reflektierten Messstrahles und werden verwendet für eine Steuerung der Messstrahl-Richtung derart, dass der Messstrahl dem Zielpunkt folgt (tracking), wenn sich dieser bewegt. Das heisst, es wird durch entsprechende Veränderung der Messstrahlrichtung bzw. der Ausrichtung des den Messstrahl ausrichtenden Spiegels dafür gesorgt, dass der parallele Versatz zwischen emittiertem und reflektiertem Messstrahl verkleinert wird bzw. möglichst klein bleibt.

Es ist offensichtlich, dass die Steuerung der Messstrahlrichtung anhand des parallelen Versatzes zwischen emittiertem und reflektiertem Messstrahl eine zwar geringe aber nicht vernachlässigbare Verzögerung aufweist, die die Geschwindigkeit beschränkt, mit der ein Zielpunkt sich bewegen und dabei verfolgt werden kann. Bewegt sich der Zielpunkt schneller, trifft der Messstrahl, bevor seine Richtung entsprechend korrigiert werden kann, nicht mehr auf den Reflektor und sowohl Tracking als auch Positionsmessung werden dadurch unterbrochen. Dasselbe kann geschehen, wenn ein Hindernis zwischen Tracker und Zielpunkt gerät, so dass der Messstrahl unterbrochen wird. Wenn der Lasertracker bzw. der Messstrahl des Lasertrackers den Reflektor "verliert", wird die Bedienungsperson darauf aufmerksam gemacht und bei entsprechender Ausrüstung des Trackers kann eine Suchroutine gestartet werden.

Sobald der Zielpunkt wieder "gefunden" ist, das heisst, der Messstrahl erneut auf den Reflektor fällt und von diesem reflektiert wird, kann die Messung der Position des Zielpunktes und seine Verfolgung durch den Messstrahl wieder aufgenommen werden, wofür gegebenenfalls die Distanzmessung neu initiiert werden muss. Die genannten Tracking-Unterbrüche sind um so häufiger, je weniger kontrolliert die Bewegungen des Zielpunktes sind und je kleiner der verwendete Reflektor und der Durchmesser des Messstrahles sind. Die gleichen Bedingungen wie während den genannten Tracking-Unterbrüchen herrschen üblicherweise auch zu Beginn eines Messprozesses, wenn der Tracker überhaupt noch nicht auf den Zielpunkt eingestellt ist.

Die genannten Tracking-Unterbrüche können bei automatisch bewegten Zielpunkten relativ einfach verhindert werden, indem die Bewegungen des Zielpunktes genau an die Tracking-Fähigkeiten des Lasertrackers angepasst werden. Dies ist aber in Messsystemen, in denen der Zielpunkt handgeführt ist, das heisst da, wo der Zielpunkt bzw. das Objekt, auf dem dieser angeordnet ist, von einer Person bewegt wird, bedeutend schwieriger, so dass Tracking-Unterbrüche nicht nur nicht vollständig vermeidbar sind sondern sogar relativ häufig vorkommen können. Dies trifft insbesondere zu für Messsysteme, in denen das den Reflektor tragende Objekt beispielsweise ein handgeführtes Tastwerkzeug oder ein handgeführter Scanner ist, wobei Tastwerkzeug oder Scanner von einer Messperson über ein zu vermessendes Objekt geführt wird und Position und Orientierung von Tastwerkzeug oder Scanner von einem Lasertracker verfolgt und im wesentlichen kontinuierlich registriert wird. Insbesondere für solche Systeme wäre es wünschenswert, wenn die oben genannten Tracking-Unterbrüche automatisch, das heisst insbesondere ohne Einbezug der Messperson, rasch überbrückt werden könnten.
Es ist auch bekannt, Lasertracker mit einem Übersichtsgerät zu versehen. Diese Kamera, die einen möglichst grossen Blickwinkel (beispielsweise ± 20° in allen Richtungen) aufweist, ist auf dem Tracker angeordnet und derart ausgerichtet, dass der Messstrahl auf einen auf dem Kamerabild erkannten Zielpunkt gerichtet werden kann. Die Ausrichtung des Messstrahles auf diesen Zielpunkt wird von einer das Kamerabild betrachtenden Bedienungsperson initiiert, indem diese den Bildbereich, in dem der Zielpunkt abgebildet ist, entsprechend bezeichnet. Das Dokument WO03/062744 A1 beschreibt eine entsprechende Anordnung. Es ist nun die Aufgabe der Erfindung, ein Tracking-Verfahren und ein für das Tracking-Verfahren ausgerüstetes Messsystem mit Lasertracker zu schaffen, mit denen es möglich wird, die oben angesprochenen Tracking-Unterbrüche automatisch und in einer einfachen Art und Weise zu überbrücken.
Diese Aufgabe wird gelöst durch das Tracking-Verfahren und das Messsystem mit Lasertracker, wie sie in den Patentansprüchen definiert sind.
Das erfindungsgemässe Tracking-Verfahren weist zwei Tracking-Modi auf und schaltet das Messsystem von einem der Tracking-Modi in den anderen, wenn der Messstrahl des Lasertrackers den Zielpunkt "verliert", bzw. diesen "wiedergefunden" hat. Der normale oder ordentliche Tracking-Modus ist das für Lasertracker bekannte Tracking, das auf dem Messstrahl basiert, in dem also beispielsweise der parallele Versatz zwischen emittiertem und reflektiertem Messstrahl detektiert und durch Änderung der Messstrahlrichtung eine Verkleinerung dieses Versatzes angestrebt wird. Im normalen Tracking-Modus detektiert der Tracker den vom Reflektor reflektierten Messstrahl und eine Bestimmung der Zielpunktposition ist jederzeit möglich. Im ausserordentlichen Tracking-Modus, in dem das erfindungsgemässe Messsystem arbeitet, wenn der Tracker den reflektierten Messstrahl nicht detektieren kann, wird die Änderung der Messstrahlrichtung gesteuert anhand von Daten, die von einem dem Lasertracker zugeordneten Übersichtsgerät aufgenommen werden. Das Übersichtsgerät ist vorteilhafterweise eine Bilddaten liefernde, digitale Übersichtskamera mit einer lichtempfindlichen Fläche (z.B. CCD) und einer Optik, die der Übersichtskamera einen für ein Übersichtsgerät üblichen Blickwinkel von beispielsweise ± 20° in allen Richtungen gibt. Das Übersichtsgerät kann aber beispielsweise auch eine mit einer gleichen oder ähnlichen Optik ausgerüstete PSD (position sensitive device) sein, die lediglich Positionsdaten liefert. Aus den vom Überblicksgerät registrierten Daten wird eine Richtung zum Reflektor bestimmt und mit einer entsprechenden Veränderung der Messstrahlrichtung wird versucht, diesen auf den Reflektor zu richten. Der ausserordentliche Tracking-Modus arbeitet also ohne Detektion des reflektierten Messstrahles und eine Bestimmung der Position des Zielpunktes mit Hilfe des Trackers ist im ausserordentlichen Tracking-Modus nicht möglich. Der ausserordentliche Tracking-Modus wird eingeschaltet, sobald im Tracker kein reflektierter Messstrahl detektiert wird. Im ausserordentlichen Tracking-Modus wird aber immer wieder überprüft, ob ein reflektierter Messstrahl detektiert wird oder nicht, und sobald dies der Fall ist, schaltet sich das System wieder in den ordentlichen Tracking-Modus und die Positionsmessung wird freigeschaltet.

Das erfindungsgemässe Messsystem arbeitet im ausserordentlichen Tracking-Modus, solange der Zielpunkt im Blickfeld des Übersichtsgeräts ist bzw. dieses Daten bezüglich Zielpunkt liefern kann und solange durch den Lasertracker kein reflektierter Messstrahl detektiert wird. Wenn sich der Zielpunkt aus dem Blickfeld des Übersichtsgeräts bewegt, wird beispielsweise die Bedienungsperson darauf aufmerksam gemacht und/oder es wird automatisch eine Suchroutine aktiviert.

Dem Lasertracker des erfindungsgemässen Messsystems ist also ein Übersichtsgerät zugeordnet. Dieses hat eine relativ zum Messstrahl jederzeit bekannte Position und Orientierung, derart, dass aus den vom Übersichtsgerät gelieferten Messdaten und aus dieser bekannten Position und Orientierung des Übersichtsgeräts eine Veränderung der Messstrahlrichtung errechnet werden kann, mit der der Messstrahl im wesentlichen auf den Zielpunkt gerichtet wird. Das Übersichtsgerät hat einen möglichst grossen Blickwinkel und kann stationär oder mit dem Messstrahl ausrichtbar auf dem Lasertracker angeordnet sein.

Ferner ist das erfindungsgemässe Messsystem ausgerüstet, um aus der bekannten Position und Orientierung des Übersichtsgeräts und aus vom Übersichtsgerät gelieferten Daten Steuerdaten für die Steuerung des Messstrahles zu generieren und um von einem Tracking-Modus in den anderen zu schalten, je nach dem, ob ein reflektierter Messstrahl detektiert wird oder nicht. Gegebenenfalls ist das Übersichtsgerät für eine Beleuchtung seines Blickfeldes ausgerüstet und/oder der Zielpunkt ist mit zusätzlichen, lichtgebenden Mitteln (aktive Lichtquellen oder reflektierende Flächen) ausgerüstet, so dass seine Position durch das Übersichtsgerät detektierbar und gegebenenfalls auch identifizierbar ist.

Für die Bestimmung einer Richtung zum Zielpunkt aus vom Übersichtsgerät aufgenommenen Daten werden per se bekannte Methoden verwendet. Wenn das Übersichtsgerät eine Kamera ist, kann der Zielpunkt anhand einer spezifischen Form oder Farbe auf dem von der Kamera aufgenommenen Bild auch identifiziert und dadurch aus einer Mehrzahl von abgebildeten Elementen erkannt und automatisch ausgewählt werden, wozu ebenfalls per se bekannte Methoden verwendet werden können. Für Fälle, in denen der Zielpunkt nicht eindeutig identifizierbar ist und eine Mehrzahl von ähnlichen Elementen auf dem Bild der Kamera erscheinen, kann beispielsweise automatisch der am nächsten am Messstrahl liegende Punkt verfolgt werden oder es kann ein Prompt an die Bedienungsperson ergehen, einen der potentiellen Zielpunkte auszuwählen. Eine Zielpunkterkennung ist mit einem Übersichtsgerät mit PSD ebenfalls möglich, wenn das vom Zielpunkt kommende Licht eine spezifische Wellenlänge hat und das Übersichtsgerät mit entsprechenden Filtern ausgerüstet ist.

Das Tracking-Verfahren und das Messsystem mit Lasertracker gemäss Erfindung werden anhand von beispielhaften Ausführungsformen, die in den folgenden Figuren illustriert sind, im Detail beschrieben. Dabei zeigen:
- Figur 1: ein vereinfachtes Blockschema einer beispielhaften Ausführungsform des erfindungsgemässen Tracking-Verfahrens;
- Figur 2: ein Schema einer beispielhaften Ausführungsform des erfindungsgemässen Messsystems mit Lasertracker.

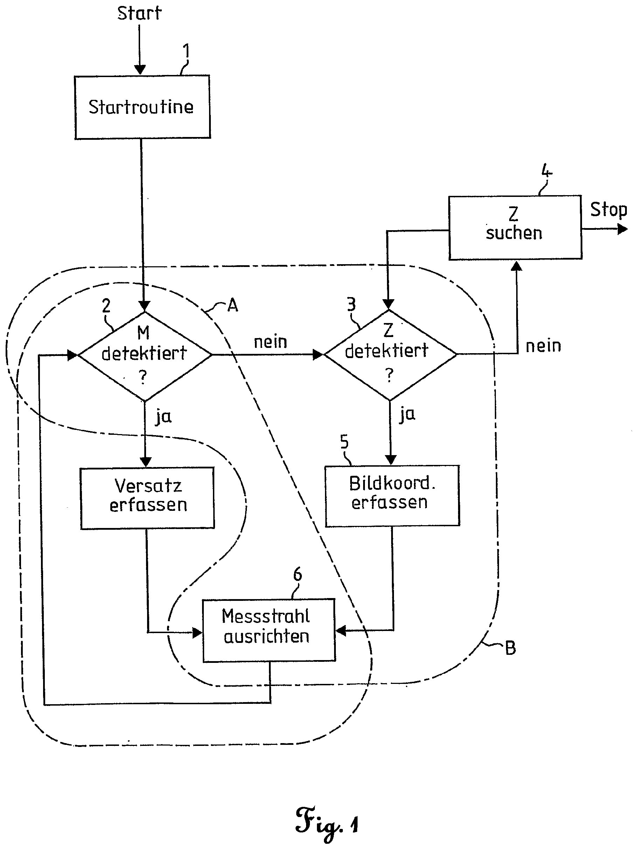

Figur 1 ist ein Blockschema einer beispielhaften Ausführungsform des erfindungsgemässen Tracking-Verfahrens, wobei nur die wichtigsten Schritte des Verfahrens dargestellt sind und wobei das Übersichtsgerät eine Übersichtskamera ist.

Nach dem Start des Systems und nach Durchführung einer vom System vorgegebenen Startroutine 1, in der die Systemteile aktiviert werden, wird festgestellt, ob der Messstrahl des Lasertrackers, der im Moment des Starts eine beliebige Ausrichtung haben kann, auf den beliebig positionierten Zielpunkt fällt oder nicht, das heisst, es wird festgestellt, ob der Tracker den reflektierten Messstrahl detektiert oder nicht (Entscheidung 2 bezüglich Detektion des reflektierten Messstrahles). Ist dies nicht der Fall, wird der Zielpunkt auf dem Bild der Übersichtskamera gesucht. Findet sich der Zielpunkt auf dem Bild der Übersichtskamera (Entscheidung 3 bezüglich Bild des Zielpunktes) nicht, wird beispielsweise eine Suchroutine 4 durchgeführt. Solche Suchroutinen sind an sich bekannt. Eine beispielhafte, im erfindungsgemässen Messsystem verwendbare Suchroutine besteht einfach darin, die Ausrichtung des Trackers oder mindestens der Übersichtskamera nach einem vorgegebenen Muster zu ändern und dabei dauernd zu überprüfen, ob der Zielpunkt auf dem der jeweiligen Ausrichtung entsprechenden Bild der Übersichtskamera findbar ist oder nicht (Entscheidung 3). Bleibt die Suche beispielsweise während einer vorgegebenen Zeit oder nach Ablauf einer vollständigen Routine erfolglos, kann sich das System gegebenenfalls mit entsprechender Mitteilung an die Bedienungsperson stoppen. Sobald der Zielpunkt auf dem Bild der Übersichtskamera gefunden wird, schaltet sich das Messsystem in den ausserordentlichen Tracking-Modus. Dabei werden die Bildkoordinaten des Zielpunktes auf dem Bild der Übersichtskamera erfasst (Bildanalyse 5) und anhand dieser Bildkoordinaten und der bekannten Position und Orientierung der Kamera relativ zum Messstrahl wird bestimmt, wie die Messstrahlrichtung verändert werden muss, um den Messstrahl auf den Zielpunkt auszurichten, was bei sich bewegendem Zielpunkt meist nicht in einem Anlauf möglich ist. Nach der entsprechenden Veränderung der Messstrahl-Ausrichtung 6 wird deshalb überprüft, ob der Messstrahl auf den Reflektor trifft oder nicht, das heisst, ob der reflektierte Messstrahl detektiert wird oder nicht (Entscheidung 2). Ist dies nicht der Fall, verbleibt das System im ausserordentlichen Tracking-Modus, das heisst, Messdaten zur Steuerung der weiteren Ausrichtung des Messstrahles werden weiter aus einem Bild der Übersichtskamera gewonnen. Wird der reflektierte Messstrahl hingegen detektiert, schaltet sich das System in den normalen, an sich bekannten Tracking-Modus, in dem Messdaten zur Steuerung der Messstrahl-Ausrichtung beispielsweise aus der Bestimmung des parallelen Versatzes zwischen emittiertem und reflektiertem Messstrahl gewonnen werden. Die entsprechenden Messdaten werden beispielsweise geliefert von einer PSD, die im Strahlengang eines Teils des reflektierten Messstrahles angeordnet ist. In diesem Modus ist auch die Bestimmung der Position des Zielpunktes freigeschaltet. Sobald der reflektierte Messstrahl nicht mehr detektiert wird (Entscheidung 2) schaltet sich das System wieder in den ausserordentlichen Tracking-Modus.

In Figur 1 sind die Hauptschritte des normalen Tracking-Modus mit einer gestrichelten und mit A bezeichneten Linie umrahmt, die Hauptschritte des ausserordentlichen Tracking-Modus mit einer strichpunktierten, mit B bezeichneten Linie.

Wenn die Genauigkeit der Messstrahlausrichtung anhand der von der Übersichtskamera gelieferten Daten nicht ausreicht, um den Zielpunkt mit dem Messstrahl mit einer genügenden Sicherheit zu treffen oder wenn sehr schnelle Bewegungen des Zielpunktes wahrscheinlich sind, mag es vorteilhaft sein, an die Einstellung des Messstrahles anhand der Daten der Übersichtskamera eine sogenannte Spiralsuche anzuschliessen, wenn der Tracker den reflektierten Messstrahl nicht detektiert. In einer derartigen Suchroutine wird der Messstrahl in einer Spirale um eine ursprünglich eingestellte Richtung bewegt.

Es ist vorteilhaft, das Messsystem derart auszurüsten, dass eine Bedienungs- oder Messperson jederzeit den Modus ablesen kann, in dem das System gerade arbeitet.

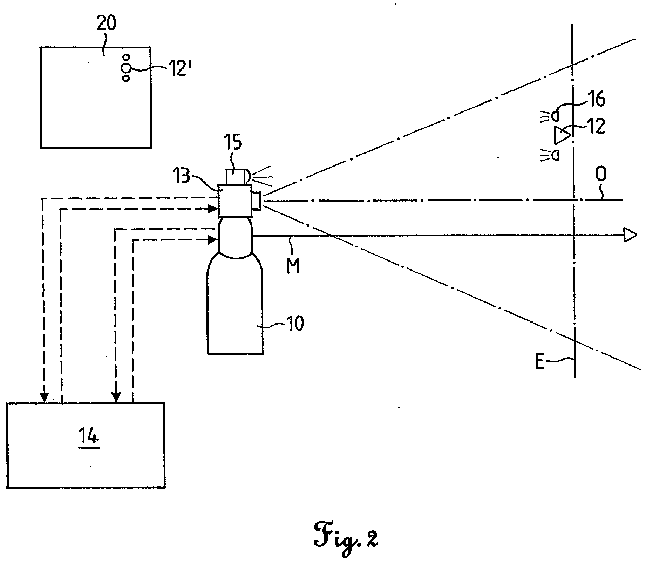

Figur 2 zeigt in einer sehr schematischen Art und Weise ein Messsystem mit Lasertracker gemäss Erfindung. Der Lasertracker 10 sendet in an sich bekannter Art und Weise einen Messstrahl M aus, dessen Richtung beispielsweise durch entsprechende Drehung eines Spiegels um zwei senkrecht aufeinander stehende Achsen einstellbar und mittels Winkelgebern für einen horizontalen und einen vertikalen Winkel relativ zu einer Nullrichtung erfassbar ist. Der Messstrahl dient ferner der Messung einer Distanz zwischen Tracker und Zielpunkt. Das Messsystem weist zusätzlich zum Lasertracker 10 einen mit einem Reflektor 12 markierten Zielpunkt auf sowie ein Übersichtsgerät 13 und eine Rechen- und Steuereinheit 14.

Das Übersichtsgerät 13 hat einen mit strichpunktierten Linien schematisch dargestellten, möglichst weiten Blickwinkel und eine ebenfalls mit einer strichpunktierten Linie dargestellte, optische Achse O. Position und Ausrichtung des Übersichtsgeräts relativ zum Messstrahl M müssen dem System jederzeit bekannt sein. Damit das Übersichtsgerät 13 den Reflektor 12 am Zielpunkt detektieren kann, muss dieser selbst beleuchtet sein oder seine Position muss mit detektierbaren Elementen markiert sein. Eine Beleuchtung des Reflektors selbst oder von reflektierenden Markierungselementen wird beispielsweise mit Hilfe eines Beleuchtungsmittels 15 im Bereiche des Übersichtsgeräts realisiert. Zur Markierung der Reflektorposition können aber auch Beleuchtungsmittel 16 im Bereiche des Reflektors 12 vorgesehen werden. Reflektierende Markierungsmittel oder Beleuchtungsmittel 16 im Bereich des Reflektors 12 sind vorteilhafterweise als Anordnung einer Mehrzahl von Markierungspunkten ausgestaltet, so dass der Zielpunkt anhand der spezifischen Geometrie dieser Anordnung im Bild einer als Übersichtsgerät funktionierenden Übersichtskamera nicht nur registrierbar sondern auch identifizierbar ist. Wenn der Reflektor 12 in einer solchen Anordnung von Markierungspunkten eine genau definierte Position hat, also beispielsweise in deren optischem Schwerpunkt angeordnet ist, reicht es, wenn die Anordnung, nicht aber der Reflektor selbst auf dem von der Übersichtskamera aufgenommenen Bild sichtbar ist oder von einer PSD im Übersichtsgerät registrierbar ist.

Das in der Figur 2 dargestellte Messsystem ist offensichtlich in einem Zustand, in dem der Messstrahl M nicht auf den Reflektor 12 trifft, der Lasertracker 10 also keinen reflektierten Messstrahl detektieren kann. Der Reflektor 12 befindet sich aber im Blickfeld des Übersichtsgeräts 13, so dass Tracking im ausserordentlichen Tracking-Modus möglich ist. Oben links in Figur 2 ist auch das von der als Übersichtsgerät funktionierenden Übersichtskamera 13 im dargestellten Moment registrierte Bild 20 abgebildet. Auf diesem Bild ist der Reflektor sichtbar (Abbild 12' mit Beleuchtungsmitteln). Die Bildkoordinaten des Reflektorabbildes 12' definieren eine Richtung von der Kamera zum Reflektor relativ zur optischen Achse 0 der Kamera. Mit Hilfe der bekannten Position und Ausrichtung der Übersichtskamera 13 bzw. ihrer optischen Achse 0 relativ zum Messstrahl kann aus den Bildkoordinaten bestimmt werden, in welcher Richtung die Messstrahlausrichtung geändert werden muss, damit dieser auf den Reflektor trifft.

Wenn die optische Achse 0 des Übersichtsgeräts 13 jederzeit mit dem Messstrahl zusammenfällt oder jederzeit parallel zu diesem ausgerichtet ist, die Ausrichtung des Übersichtsgeräts also fest mit der Ausrichtung des Messstrahls gekoppelt ist, ist die Berechnung der Steuergrössen für die Messstrahlausrichtung relativ einfach. Wenn die Ausrichtung der optischen Achse 0 des Übersichtsgeräts 13 und des Messstrahls M nicht aneinander gekoppelt sind, wird die Berechnung der Messgrössen aufwendiger und gegebenenfalls abhängig von der Distanz zwischen Tracker 10 und Reflektor 12, die in diesem Falle ebenfalls bekannt sein muss. Diese Distanz kann mindestens approximativ beispielsweise von der Optik des Übersichtsgeräts 13 geliefert werden oder es kann die letzte durch den Tracker gemessene Distanz verwendet werden.

Je nach optischer Ausrüstung des Übersichtsgeräts sind auch interne Bedingungen dieses Geräts in die Berechnung der für die Messstrahlsteuerung notwendigen Daten einzubeziehen.

Eine von der momentanen Ausrichtung des Messstrahles abhängige, gewinkelte Anordnung von optischer Achse 0 des Übersichtsgeräts 13 und Messstrahl M weist beispielsweise eine Anordnung auf, in der das Übersichtsgerät 13 mit dem Messstrahl M um die vertikale Trackerachse (Stehachse) drehbar ist, nicht aber um die horizontale Trackerachse (Kippachse). In der bevorzugten Ausführungsform des erfindungsgemässen Messsystems ist das Übersichtsgerät 13 oder mindestens seine optische Achse 0 an die Ausrichtung des Messstrahls M gekoppelt, dadurch, dass das Übersichtsgerät beispielsweise auf dem den Messstrahl ausrichtenden und dafür um zwei Achsen drehbaren Teil des Trackers 10 angeordnet ist, oder dadurch, dass dem Übersichtsgerät 13 eine Optik vorgeschaltet ist, durch die die optische Achse koaxial oder parallel mit dem Messstrahl ausgerichtet wird.

Wie bereits weiter oben angetönt, ist es vorteilhaft, den Reflektor 12 derart auszurüsten, dass sein Abbild 12' auf dem von einer Übersichtskamera 13 aufgenommenen Bild 20 identifizierbar ist. Dies wird beispielsweise realisiert, indem um den Reflektor 12 aktive Lichtpunkte 16 oder beispielsweise vom Tracker aus beleuchtete, reflektierende Markierungspunkte angeordnet werden. Diese Anordnung erscheint auf dem Bild 20 der Übersichtskamera 13, auch wenn der Reflektor 12 selbst mangels von der Kamera her darauf fallenden Lichtes gegebenenfalls nicht abgebildet wird. Ist der Reflektor 12 im optischen Schwerpunkt der genannten Anordnung angeordnet, können seine Bildkoordinaten in einfacher Art und Weise aus dem Abbild der Anordnung bestimmt werden.

Figur 2 zeigt auch die Rechen- und Steuereinheit 14 und diese mit dem Übersichtsgerät 13 und dem Lasertracker 10 verbindende Datenlinien (gestrichelt dargestellt), durch die Steuer- und Auslesebefehle von der Rechen- und Steuereinheit an Tracker 10 und Übersichtsgerät 13 und Messdaten in der umgekehrten Richtung transferiert werden. Selbstverständlich können mindestens Teile der Rechen- und Steuereinheit 14 auch im Tracker 10 und/oder im Übersichtsgerät integriert sein und können Daten zwischen diesen und der Rechen- und Steuereinheit auch drahtlos übermittelt werden.

## Patentansprüche

1. Tracking-Verfahren, in dem ein mit einem Reflektor (12) ausgerüsteter Zielpunkt von einem Messstrahl (M) eines Lasertrackers (10) verfolgt wird, wobei in einem normalen Tracking-Modus (A) aus der Detektion des vom Reflektor (12) reflektierten Messstrahls eine Messgrösse zur Steuerung der Ausrichtung des Messstrahles (M) abgeleitet wird,
• wobei zusätzlich in einem ausserordentlichen Tracking-Modus (B) die Messgrösse zur Steuerung der Ausrichtung des Messstrahles (M) aus Daten abgeleitet wird, die von einem Übersichtsgerät (13) registriert werden,
• wobei das Übersichtsgerät (13) eine relativ zum Messstrahl (M) bekannte Position und Orientierung aufweist,
• und wobei eine Beleuchtung des Reflektors (12) selbst mit Hilfe eines Beleuchtungsmittels (15) im Bereiche des Übersichtsgeräts erfolgt, insbesondere wobei durch das Beleuchtungsmittel (15) das Blickfeld des Übersichtsgeräts (13) beleuchtet wird,
**dadurch gekennzeichnet, dass**
• der ausserordentliche Tracking-Modus (B) aktivierbar ist, insbesondere aktiv ist, wenn kein vom Reflektor (12) reflektierter Messstrahl detektiert wird und
• im ausserordentlichen Tracking-Modus (B) die Detektion des reflektierten Messstrahles durch den Lasertracker (10) überwacht wird und automatisch in den normalen Tracking-Modus (A) geschaltet wird, sobald der reflektierte Messstrahl detektiert wird.

2. Verfahren nach Anspruch 1,
**dadurch gekennzeichnet, dass**
automatisch in den ausserordentlichen Tracking-Modus (B) geschaltet wird, sobald vom Tracker (10) kein reflektierter Messstrahl detektiert wird.

3. Verfahren nach Anspruch 1 oder 2,
**dadurch gekennzeichnet, dass**
das Übersichtsgerät (13) eine Übersichtskamera ist und die von der Übersichtskamera (13) registrierten Daten Bildkoordinaten eines Reflektorabbildes (12') sind.

4. Verfahren nach einem der Ansprüche 1 bis 3,
**dadurch gekennzeichnet, dass**
die Messgrösse zur Steuerung der Ausrichtung des Messstrahles (M) im ausserordentlichen Tracking-Modus (B) anhand einer Richtung zum Zielpunkt, die bestimmt wird aus den vom Übersichtsgerät (13) registrierten Daten, und anhand der bekannten Position und Orientierung des Übersichtsgeräts (13) berechnet wird.

5. Verfahren nach einem der Ansprüche 3 bis 4,
**dadurch gekennzeichnet, dass**
der Zielpunkt durch die Übersichtskamera zusätzlich auch identifiziert wird.

6. Verfahren nach Anspruch 5,
**dadurch gekennzeichnet, dass**
der Zielpunkt auf den Bildern (20) der Übersichtskamera (13) identifiziert wird anhand der Abbildung einer Mehrzahl von um den Reflektor (12) angeordneter Lichtpunkte (16) oder reflektierender Markierungselemente.

7. Verfahren nach einem der Ansprüche 1 bis 6,
**dadurch gekennzeichnet, dass**
die Ausrichtung der optischen Achse (O) des Übersichtsgeräts (13) fest mit der Ausrichtung des Messstrahles (M) gekoppelt ist.

8. Messsystem mit Lasertracker (10), Zielpunkt mit Reflektor (12) und Rechen- und Steuereinheit (14), in welchem Messsystem in einem normalen Tracking-Modus (A) ein vom Lasertracker (10) emittierter Messstrahl (M) den Reflektor (12) verfolgt, wobei die Rechen- und Steuereinheit (14) ausgerüstet ist, um die entsprechende Ausrichtung des Messstrahles (M) anhand der Detektion des vom Reflektor (12) reflektierten Messstrahles zu steuern,
• wobei das Messsystem zusätzlich ein Übersichtsgerät (13) aufweist, das in einer relativ zum Messstrahl (M) bekannten Position und Orientierung angeordnet ist, insbesondere wobei das Übersichtsgerät (13) eine Übersichtskamera ist und zur Generierung von Bildkoordinaten eines Reflektorabbildes (12') als Daten ausgebildet ist,
• wobei das Messsystem zusätzlich ein Beleuchtungsmittel (15) im Bereich des Übersichtsgeräts aufweist, welches zur Beleuchtung des Reflektors (12) selbst ausgebildet ist, insbesondere wobei durch das Beleuchtungsmittel (15) das Blickfeld des Übersichtsgeräts (13) beleuchtbar ist,
• und wobei die Rechen- und Steuereinheit (14) zusätzlich ausgerüstet ist, um in einem ausserordentlichen Tracking-Modus (B) die Ausrichtung des Messstrahls (M) anhand von den Daten, die vom Übersichtsgerät (13) generiert werden, und der bekannten Position und Orientierung des Übersichtsgeräts (13) zu steuern,
**dadurch gekennzeichnet, dass**
die Rechen- und Steuereinheit (14) zusätzlich ausgerüstet ist, um im ausserordentlichen Tracking-Modus (B), der aktivierbar ist, insbesondere aktiv ist, wenn kein vom Reflektor (12) reflektierter Messstrahl detektiert wird, die Detektion des reflektierten Messstrahles zu überwachen und automatisch in den normalen Tracking-Modus (A) zu schalten, sobald der reflektierte Messstrahl detektiert wird.

9. Messsystem nach Anspruch 8,
**dadurch gekennzeichnet, dass**
die Rechen- und Steuereinheit (14) zusätzlich ausgerüstet ist, um im ausserordentlichen Tracking-Modus (B) die Ausrichtung des Messstrahls (M) zu steuern anhand von einer Messgrösse, die berechnet wird anhand einer Richtung zum Reflektor (12), die bestimmt wird aus den vom Übersichtsgerät (13) generierten Daten, und anhand der bekannten Position und Orientierung des Übersichtsgeräts (13).

10. Messsystem nach Anspruch 8 oder 9,
**dadurch gekennzeichnet, dass**
das Übersichtsgerät (13) am Lasertracker (10) derart angeordnet ist, dass die Ausrichtung seiner optischen Achse (O) an die Ausrichtung des Messstrahles (M) gekoppelt ist.

11. Messsystem nach Anspruch 10,
**dadurch gekennzeichnet, dass**
das Übersichtsgerät (13) am Lasertracker (10) derart angeordnet ist, dass seine optische Achse (O) immer koaxial oder parallel zum Messstrahl (M) verläuft.

12. Messsystem nach einem der Ansprüche 8 bis 11,
**dadurch gekennzeichnet, dass**
der Zielpunkt auf einem handgeführten Tastwerkzeug oder Scanner angeordnet ist.

13. Messsystem nach einem der Ansprüche 8 bis 12,
**dadurch gekennzeichnet, dass**
um den im Zielpunkt angeordneten Reflektor (12) eine Mehrzahl von Lichtpunkten (16) oder reflektierenden Markierungselementen angeordnet ist und dass die Rechen- und Steuereinheit (14) oder das Übersichtsgerät (13) ausgerüstet ist, um anhand einer Abbildung der Mehrzahl von den um den Reflektor (12) angeordneten Lichtpunkten (16) bzw. reflektierenden Markierungselementen den Zielpunkt zu identifizieren.

14. Tracking-Verfahren, in dem ein mit einem Reflektor (12) ausgerüsteter Zielpunkt von einem Messstrahl (M) eines Lasertrackers (10) verfolgt wird, wobei in einem normalen Tracking-Modus (A) aus der Detektion des vom Reflektor (12) reflektierten Messstrahls eine Messgrösse zur Steuerung der Ausrichtung des Messstrahles (M) abgeleitet wird,
• wobei zusätzlich in einem ausserordentlichen Tracking-Modus (B) die Messgrösse zur Steuerung der Ausrichtung des Messstrahles (M) aus Daten abgeleitet wird, die von einem Übersichtsgerät (13) registriert werden,
• und wobei das Übersichtsgerät (13) eine relativ zum Messstrahl (M) bekannte Position und Orientierung aufweist,
**dadurch gekennzeichnet, dass**
• der Zielpunkt zusätzlich ausgerüstet ist mit einer Mehrzahl von um den Reflektor (12) angeordneter Lichtpunkte (16) oder reflektierender Markierungselemente,
• das Übersichtsgerät (13) eine Übersichtskamera ist und die von der Übersichtskamera (13) registrierten Daten Bildkoordinaten einer Abbildung der Mehrzahl von den um den Reflektor (12) angeordneten Lichtpunkten (16) bzw. reflektierenden Markierungselementen sind,
• der ausserordentliche Tracking-Modus (B) aktivierbar ist, insbesondere aktiv ist, wenn kein vom Reflektor (12) reflektierter Messstrahl detektiert wird,
• und dass im ausserordentlichen Tracking-Modus (B) die Detektion des reflektierten Messstrahles durch den Lasertracker (10) überwacht wird und automatisch in den normalen Tracking-Modus (A) geschaltet wird, sobald der reflektierte Messstrahl detektiert wird.

15. Messsystem mit Lasertracker (10), Zielpunkt mit Reflektor (12) und Rechen- und Steuereinheit (14), in welchem Messsystem in einem normalen Tracking-Modus (A) ein vom Lasertracker (10) emittierter Messstrahl (M) den Reflektor (12) verfolgt, wobei die Rechen- und Steuereinheit (14) ausgerüstet ist, um die entsprechende Ausrichtung des Messstrahles (M) anhand der Detektion des vom Reflektor (12) reflektierten Messstrahles zu steuern,
• wobei das Messsystem zusätzlich ein Übersichtsgerät (13) aufweist, das in einer relativ zum Messstrahl (M) bekannten Position und Orientierung angeordnet ist,
• und wobei die Rechen- und Steuereinheit (14) zusätzlich ausgerüstet ist, um in einem ausserordentlichen Tracking-Modus (B) die Ausrichtung des Messstrahls (M) anhand von den Daten, die vom Übersichtsgerät (13) generiert werden, und der bekannten Position und Orientierung des Übersichtsgeräts (13) zu steuern,
**dadurch gekennzeichnet, dass**
• der Zielpunkt zusätzlich ausgerüstet ist mit einer Mehrzahl von um den Reflektor (12) angeordneter Lichtpunkte (16) oder reflektierender Markierungselemente,
• das Übersichtsgerät (13) eine Übersichtskamera ist und zur Generierung von Bildkoordinaten einer Abbildung der Mehrzahl von den um den Reflektor (12) angeordneten Lichtpunkten (16) bzw. reflektierenden Markierungselementen als Daten ausgebildet ist,
• und dass die Rechen- und Steuereinheit (14) zusätzlich ausgerüstet ist, um im ausserordentlichen Tracking-Modus (B), der aktivierbar ist, insbesondere aktiv ist, wenn kein vom Reflektor (12) reflektierter Messstrahl detektiert wird, die Detektion des reflektierten Messstrahles zu überwachen und automatisch in den normalen Tracking-Modus (A) zu schalten, sobald der reflektierte Messstrahl detektiert wird.

## Claims

1. A tracking method, in which a target point provided with a reflector (12) is tracked by a measurement beam (M) of a laser tracker (10), wherein in an ordinary tracking mode (A), data for controlling the direction of the measurement beam (M) is derived from the detection of the measurement beam being reflected by the reflector (12),
• wherein additionally, in an extraordinary tracking mode (B), the data for controlling the direction of the measurement beam (M) is derived from data being registered by an overview apparatus (13),
• wherein the overview apparatus (13) has a known position and orientation relative to the measurement beam (M),
• and wherein an illumination of the reflector (12) itself is realised with the help of an illumination means (15) in the region of the overview apparatus, in particular wherein the viewing field of the overview apparatus (13) is illuminated by the illumination means (15),
**characterized in that**
• the extraordinary tracking mode (B) can be activated, particularly is active, when no measurement beam reflected by the reflector (12) is detected, and
• in the extraordinary tracking mode (B), the detection of the reflected measurement beam is monitored by the laser tracker (10) and the ordinary tracking mode (A) is automatically activated, as soon as the reflected measurement beam is detected.

2. The method according to claim 1,
**characterized in that**
the extraordinary tracking mode (B) is automatically activated as soon as no reflected measurement beam is detected by the tracker (10).

3. The method according to claim 1 or 2,
**characterized in that**
the overview apparatus (13) is an overview camera and the data registered by the overview camera (13) are image coordinates of a reflector image (12').

4. The method according to any one of the claim 1 to 3,
**characterized in that,**
in the extraordinary tracking mode (B), the data for controlling the direction of the measurement beam (M) is computed from a direction to the target point being determined from data registered by the overview apparatus (13), and from the known position and orientation of the overview apparatus (13).

5. The method according to any one of the claim 3 to 4,
**characterized in that**
the target point is in addition identified by the overview camera.

6. The method according to claim 5,
**characterized in that**
the target point is identified on the images (20) registered by the overview camera (13) with the aid of the image of a plurality of light points (16) or reflecting marking elements, which are arranged around the reflector (12).

7. The method according to any one of the claims 1 to 6,
**characterized in that**
the direction of the optical axis (O) of the overview apparatus (13) is coupled to the direction of the measurement beam (M) in a fixed manner.

8. A measurement system comprising a laser tracker (10), a target point with a reflector (12) and a computation and control unit (14), in which measurement system a measurement beam (M) emitted by the laser tracker (10) tracks the reflector (12) in an ordinary tracking mode (A), wherein the computation and control unit (14) is configured for controlling the direction of the measurement beam (M) with the aid of detecting the measurement beam being reflected by the reflector (12),
• wherein the measurement system additionally comprises an overview apparatus (13) which is arranged in a known position and orientation relative the measurement beam (M), in particular wherein the overview apparatus (13) is an overview camera and is configured for generating as data image coordinates of a reflector image (12'),
• wherein the measurement system additionally comprises an illumination means (15) in the region of the overview apparatus, which is configured for the illumination of the reflector (12) itself, in particular wherein the viewing field of the overview apparatus (13) can be illuminated by the illumination means (15),
• and wherein the computation and control unit (14) is in addition configured for controlling the direction of the measurement beam (M), in an extraordinary tracking mode (B), with the aid of data being generated by the overview apparatus (13), and with the aid of the known position and orientation of the overview apparatus (13),
**characterized in that**
the computation and control unit (14) is in addition configured for monitoring the detection of the reflected measurement beam in the extraordinary tracking mode (B), which can be activated, particularly is active, when no measurement beam reflected by the reflector (12) is detected, and for automatically activating the ordinary tracking mode (A), as soon as the reflected measurement beam is detected.

9. The measurement system according to claim 8,
**characterized in that**
the computation and control unit (14) is in addition configured for controlling the direction of the measurement beam (M) in the extraordinary tracking mode (B), with the aid of data which is computed from a direction to the reflector (12), which is determined from the data registered by the overview apparatus (13), and with the aid of the known position and orientation of the overview apparatus (13).

10. The measurement system according to claim 8 or 9,
**characterized in that**
the overview apparatus (13) is arranged on the laser tracker (10) in a manner such that a direction of an optic axis (0) of the overview apparatus is coupled to the direction of the measurement beam (M).

11. The measurement system according to claim 10,
**characterized in that**
the overview apparatus (13) is arranged on the laser tracker (10) in a manner such that its optical axis (0) always runs coaxially or parallel to the measurement beam (M).

12. The measurement system according to any one of claims 8 to 11,
**characterized in that**
the target point is arranged on a hand-held touch tool or scanner.

13. The measurement system according to any one of claims 8 to 12,
**characterized in that**
a plurality of light points (16) or reflecting marking elements is arranged around the reflector (12) arranged in the target point, and that the computation and control unit (14) or the overview apparatus (13) is configured to identify the target point with the aid of an image of the plurality of light points or reflecting marking elements arranged around the reflector (12).

14. A tracking method, in which a target point provided with a reflector (12) is tracked by a measurement beam (M) of a laser tracker (10), wherein in an ordinary tracking mode (A), data for controlling the direction of the measurement beam (M) is derived from the detection of the measurement beam being reflected by the reflector (12),
• wherein additionally, in an extraordinary tracking mode (B), the data for controlling the direction of the measurement beam (M) is derived from data being registered by an overview apparatus (13),
• and wherein the overview apparatus (13) has a known position and orientation relative to the measurement beam (M),
**characterized in that**
• the target point comprises a plurality of light points (16) or reflecting marking elements, which are arranged around the reflector (12),
• the overview apparatus (13) is an overview camera and the data registered by the overview camera are image coordinates of an image of the plurality of light points (16) or reflecting marking elements arranged around the reflector (12),
• the extraordinary tracking mode (B) can be activated, particularly is active, when no measurement beam reflected by the reflector (12) is detected,
• and that in the extraordinary tracking mode (B), the detection of the reflected measurement beam is monitored by the laser tracker (10) and the ordinary tracking mode (A) is automatically activated, as soon as the reflected measurement beam is detected.

15. A measurement system comprising a laser tracker (10), a target point with a reflector (12) and a computation and control unit (14), in which measurement system a measurement beam (M) emitted by the laser tracker (10) tracks the reflector (12) in an ordinary tracking mode (A), wherein the computation and control unit (14) is configured for controlling the direction of the measurement beam (M) with the aid of detecting the measurement beam being reflected by the reflector (12),
• wherein the measurement system additionally comprises an overview apparatus (13) which is arranged in a known position and orientation relative the measurement beam (M),
• and wherein the computation and control unit (14) is in addition configured for controlling the direction of the measurement beam (M), in an extraordinary tracking mode (B), with the aid of data being generated by the overview apparatus (13), and with the aid of the known position and orientation of the overview apparatus (13),
**characterized in that**
• the target point additionally comprises a plurality of light points (16) or reflecting marking elements, which are arranged around the reflector (12),
• the overview apparatus (13) is an overview camera and configured for generating as data image coordinates of an image of the plurality of light points (16) or reflecting marking elements arranged around the reflector (12),
• and that the computation and control unit (14) is in addition configured for monitoring the detection of the reflected measurement beam in the extraordinary tracking mode (B), which can be activated, particularly is active, when no measurement beam reflected by the reflector (12) is detected, and for automatically activating the ordinary tracking mode (A) as soon as the reflected measurement beam is detected.

## Revendications

1. Procédé de suivi, dans lequel une cible dotée d'un réflecteur (12) est suivie par un faisceau de mesure (M) d'un appareil de suivi laser (10), une grandeur mesurée destinée à commander la direction du faisceau de mesure (M) étant dérivée, dans un mode de suivi ordinaire (A), à partir de la détection du faisceau de mesure réfléchi par le réflecteur (12),
• la grandeur mesurée destinée à commander la direction du faisceau de mesure (M) étant en outre dérivée, dans un mode de suivi non ordinaire (B), à partir de données enregistrées par un appareil de surveillance (13),
• l'appareil de surveillance (13) présentant une position et une orientation connues par rapport au faisceau de mesure (M),
• et le réflecteur (12) lui-même étant éclairé à l'aide d'un moyen d'éclairage (15) situé à proximité de l'appareil de surveillance, le champ de vision de l'appareil de surveillance (13) étant notamment éclairé par le moyen d'éclairage (15),
**caractérisé en ce que**
• le mode de suivi non ordinaire (B) est activable, et est notamment actif lorsqu'il n'est détecté aucun faisceau de mesure réfléchi par le réflecteur (12) et
• dans le mode de suivi non ordinaire (B), la détection du faisceau de mesure réfléchi est surveillée par l'appareil de suivi laser (10) et le suivi passe automatiquement en mode de suivi ordinaire (A) dès que le faisceau de mesure réfléchi est détecté.

2. Procédé selon la revendication 1,
**caractérisé en ce que**
le suivi passe automatiquement en mode de suivi non ordinaire (B) dès que l'appareil de suivi (10) ne détecte plus le faisceau de mesure réfléchi.

3. Procédé selon la revendication 1 ou 2,
**caractérisé en ce que**
l'appareil de surveillance (13) est une caméra de surveillance et les données enregistrées par la caméra de surveillance (13) sont des coordonnées d'image d'une image du réflecteur (12').

4. Procédé selon l'une des revendications 1 à 3,
**caractérisé en ce que**
la grandeur mesurée destinée à commander la direction du faisceau de mesure (M) est calculée, en mode de suivi non ordinaire (B), compte tenu d'un pointage vers la cible déterminé à partir des données enregistrées par l'appareil de surveillance (13) et compte tenu de la position et de l'orientation connues de l'appareil de surveillance (13).

5. Procédé selon l'une des revendications 3 et 4,
**caractérisé en ce que**
la cible est par ailleurs identifiée par la caméra de surveillance.

6. Procédé selon la revendication 5,
**caractérisé en ce que**
la cible est identifiée sur les images (20) de la caméra de surveillance (13) compte tenu de l'image d'une pluralité de points lumineux (16) ou d'éléments de repérage réfléchissants disposés autour du réflecteur (12).

7. Procédé selon l'une des revendications 1 à 6,
**caractérisé en ce que**
la direction de l'axe optique (O) de l'appareil de surveillance (13) est couplée de manière constante avec la direction du faisceau de mesure (M).

8. Système de mesure comprenant un appareil de suivi laser (10), une cible dotée d'un réflecteur (12) et une unité de calcul et de commande (14), ledit système de mesure comportant un faisceau de mesure (M) émis par l'appareil de suivi laser (10) qui, dans un mode de suivi ordinaire (A), suit le réflecteur (12), l'unité de calcul et de commande (14) étant équipée de manière à commander la direction correspondante du faisceau de mesure (M) compte tenu de la détection du faisceau de mesure réfléchi par le réflecteur (12),
• le système de mesure présentant en outre un appareil de surveillance (13) placé dans une position et une orientation connues par rapport au faisceau de mesure (M), l'appareil de surveillance (13) étant notamment une caméra de surveillance et étant notamment conçu pour générer des données correspondant aux coordonnées d'image d'une image de réflecteur (12'),
• le système de mesure comportant en outre un moyen d'éclairage (15) situé à proximité de l'appareil de surveillance et conçu pour éclairer le réflecteur (12) lui-même, le champ de vision de l'appareil de surveillance (13) pouvant notamment être éclairé par le moyen d'éclairage (15),
• et l'unité de calcul et de commande (14) étant en outre équipée de manière à commander, dans un mode de suivi non ordinaire (B), la direction du faisceau de mesure (M) compte tenu des données générées par l'appareil de surveillance (13) et de la position et de l'orientation connues de l'appareil de surveillance (13),
**caractérisé en ce que**
l'unité de calcul et de commande (14) est en outre équipée de manière à, en mode de suivi non ordinaire (B), lequel est activable, et notamment actif lorsqu'il n'est détecté aucun faisceau de mesure réfléchi par le réflecteur (12), surveiller la détection du faisceau de mesure réfléchi et passer automatiquement en mode de suivi ordinaire (A) dès que le faisceau de mesure réfléchi est détecté.

9. Système de mesure selon la revendication 8,
**caractérisé en ce que**
l'unité de calcul et de commande (14) est en outre équipée de manière à commander, en mode de suivi non ordinaire (B), la direction du faisceau de mesure (M) compte tenu d'une grandeur mesurée elle-même calculée compte tenu d'un pointage vers le réflecteur (12) déterminé à partir des données générées par l'appareil de surveillance (13) et compte tenu de la position et de l'orientation connues de l'appareil de surveillance (13).

10. Système de mesure selon la revendication 8 ou 9,
**caractérisé en ce que**
l'appareil de surveillance (13) est disposé auprès de l'appareil de suivi laser (10) de sorte que la direction de son axe optique (O) est couplée à la direction du faisceau de mesure (M).

11. Système de mesure selon la revendication 10,
**caractérisé en ce que**
l'appareil de surveillance (13) est disposé auprès de l'appareil de suivi laser (10) de sorte que son axe optique (O) reste toujours coaxial ou parallèle au faisceau de mesure (M).

12. Système de mesure selon l'une des revendications 8 à 11,
**caractérisé en ce que**
la cible est disposée sur un outil de palpage ou numériseur manuel.

13. Système de mesure selon l'une des revendications 8 à 12,
**caractérisé en ce que**
une pluralité de points lumineux (16) ou d'éléments de repérage réfléchissants sont disposés autour du réflecteur (12) placé sur la cible et **en ce que** l'unité de calcul et de commande (14) ou l'appareil de surveillance (13) est équipé(e) de manière à identifier la cible compte tenu d'une image de la pluralité de points lumineux (16) ou d'éléments de repérage réfléchissants disposés autour du réflecteur (12).

14. Procédé de suivi, dans lequel une cible dotée d'un réflecteur (12) est suivie par un faisceau de mesure (M) d'un appareil de suivi laser (10), une grandeur mesurée destinée à commander la direction du faisceau de mesure (M) étant dérivée, dans un mode de suivi ordinaire (A), à partir de la détection du faisceau de mesure réfléchi par le réflecteur (12),
• la grandeur mesurée destinée à commander la direction du faisceau de mesure (M) étant en outre dérivée, dans un mode de suivi non ordinaire (B), à partir de données enregistrées par un appareil de surveillance (13),
• et l'appareil de surveillance (13) présentant une position et une orientation connues par rapport au faisceau de mesure (M),
**caractérisé en ce que**
• la cible est en outre équipée d'une pluralité de points lumineux (16) ou d'éléments de repérage réfléchissants disposés autour du réflecteur (12),
• l'appareil de surveillance (13) est une caméra de surveillance et les données enregistrées par la caméra de surveillance (13) sont des coordonnées d'image d'une image de la pluralité de points lumineux (16) ou d'éléments de repérage réfléchissants disposés autour du réflecteur (12),
• le mode de suivi non ordinaire (B) est activable, et est notamment actif lorsqu'il n'est détecté aucun faisceau de mesure réfléchi par le réflecteur (12),
• et **en ce que**, dans le mode de suivi non ordinaire (B), la détection du faisceau de mesure réfléchi est surveillée par l'appareil de suivi laser (10) et le suivi passe automatiquement en mode de suivi ordinaire (A) dès que le faisceau de mesure réfléchi est détecté.

15. Système de mesure comprenant un appareil de suivi laser (10), une cible dotée d'un réflecteur (12) et une unité de calcul et de commande (14), ledit système de mesure comportant un faisceau de mesure (M) émis par l'appareil de suivi laser (10) qui, dans un mode de suivi ordinaire (A), suit le réflecteur (12), l'unité de calcul et de commande (14) étant équipée de manière à commander la direction correspondante du faisceau de mesure (M) compte tenu de la détection du faisceau de mesure réfléchi par le réflecteur (12),
• le système de mesure présentant en outre un appareil de surveillance (13) placé dans une position et une orientation connues par rapport au faisceau de mesure (M),
• et l'unité de calcul et de commande (14) étant en outre équipée de manière à commander, dans un mode de suivi non ordinaire (B), la direction du faisceau de mesure (M) compte tenu des données générées par l'appareil de surveillance (13) et de la position et de l'orientation connues de l'appareil de surveillance (13),
**caractérisé en ce que**
• la cible est en outre équipée d'une pluralité de points lumineux (16) ou d'éléments de repérage réfléchissants disposés autour du réflecteur (12),
• l'appareil de surveillance (13) est une caméra de surveillance destinée à générer des données qui sont des coordonnées d'image d'une image de la pluralité de points lumineux (16) ou d'éléments de repérage réfléchissants disposés autour du réflecteur (12),
• et **en ce que** l'unité de calcul et de commande (14) est en outre équipée de manière à, en mode de suivi non ordinaire (B), lequel est activable, et est notamment actif lorsqu'il n'est détecté aucun faisceau de mesure réfléchi par le réflecteur (12), surveiller la détection du faisceau de mesure réfléchi et passer automatiquement en mode de suivi ordinaire (A) dès que le faisceau de mesure réfléchi est détecté.
